# EUROPEAN PATENT APPLICATION

(11) **EP 4 671 115 A1**
(43) Date of publication of application: **31.12.2025**
(21) Application number: 25184173.0
(22) Date of filing: 20.06.2025
(51) Int. Cl.: B63H 9/10, F16D 41/12

(54) **IN-BOOM FURLING SYSTEM FOR A SAILING YACHT**

(30) Priority: 27.06.2024 EP 24184964
(71) Applicant: Mainfurl A/S, 7160 Tørring (DK)
(72) Inventor: HULEGAARD, Claus, 7100 Vejle (DK); WESTFAL, Peter, 7120 Vejle Øst (DK); MIKKELSEN, Carsten, 8000 Aarhus C (DK)
(74) Representative: Inspicos P/S

(57) **Abstract**

The present invention relates to an in-boom furling system for a sailing yacht, the in-boom furling system comprising a static part, a mandrel rotationally attached to the static part and comprising an attachment structure suitable for attachment of a foot of a mainsail to thereby allow furling of the mainsail when rotated in a furling direction and unfurling of the mainsail when rotated in an unfurling direction, a furling structure comprising a rotatably mounted line drive assembly, wherein the rotatably mounted line drive assembly is rotationally attached to the static part and adapted to be rotated relative to the static part by use of a furling line, and a coupling element having a coupling state and a release state, wherein the coupling element, in the coupling state, provides interaction between the line drive assembly and the rotatably mounted mandrel so that the rotatably mounted mandrel is rotatable at least in the furling direction by rotation of the line drive assembly in the furling direction when the mainsail is to be furled around the rotatably mounted mandrel, and wherein the coupling element, in the release state, allows the rotatably mounted mandrel to rotate freely, such as in the unfurling direction, relative to the rotatably mounted line drive assembly. The present invention further relates to a furling boom comprising an in-boom furling system, and methods for hoisting and reefing a mainsail of a sailing yacht comprising an in-boom furling system.

## Description

### FIELD OF THE INVENTION

The present invention relates to an in-boom furling system for a sailing yacht. The in-boom furling system comprises a static part, a mandrel rotationally attached to the static part, a furling structure comprising a rotatably mounted line drive assembly, and a coupling element having a coupling state and a release state. When the coupling element is in its release state the rotatably mounted mandrel is allowed to rotate freely.

### BACKGROUND OF THE INVENTION

Technological advancements in building materials and design have led to an increase in sailing yachts designed for comfort and ease of handling, yet without compromising performance. In fact, in many cases, it has allowed sailing yachts to become faster. These yachts are longer, carry more mainsail area, have taller rigs, and introduce associated challenges with mainsail handling and control.

The introduction of in-mast furling of mainsails in the late 20^{th} century overcame complications associated with larger equipment. However, initial systems faced inherent problems that quickly became evident. Larger mast sections and the weight of bearings and furling spars necessitated longer keels to compensate for stability loss. Moreover, greater draft imposed limitations on anchorage options and, according to many, led to a performance decrease due to a hollow-cut leach on the mainsail.

Despite the initial challenges, the introduction of in-mast furling systems was a breakthrough, allowing many to sail either short-handed or with less effort.

Recognizing the benefits of furling mainsails in general, in-boom furling systems were developed to address the inherent limitations of in-mast furling systems. The following criteria had to be met in this respect:
1) The in-boom furling system should preserve sail efficiency at all hoist points.
2) The in-boom furling system could be manually or power-assisted from the cockpit.
3) System operation should be flawless and user-friendly.

Various in-boom furling systems were developed, and in the late 1990s, an in-boom furling system with a single attachment point on the mast and a flexible mast track ramp was developed and introduced to the market. This in-boom furling system enabled the mainsail to be furled and reefed without the yacht needing to head directly into the wind. The in-boom furling system offers easy and safe operation from the yacht's cockpit on one hand, but on the other hand, it has a number of weaknesses.

A manually operated in-boom furling system is operated via an endless furling line, which, through a drive at the front of the boom, activates the mandrel around which the mainsail is furled. In the initial design, this endless furling line was led into the boom through a hole in the boom's port side and then continued around the drive and out of the boom through a hole in the starboard side of the furling boom. As a consequence, it was necessary to cut the endless furling line if the furling boom needed to be removed from the yacht, for example, in connection with service, repair and/or winter storage.

Similarly, the endless furling line was vulnerable as it required a solid and correct splice. Especially during reefing of the mainsail, where the mainsail is partially furled in, the endless furling line was exposed to large forces, as the furling line keeps the mainsail down while the mainsail's halyard tensions the sail in an upward/unfurling direction.

In 2020, the inventors took steps to modify the aforementioned design so that it was possible to remove the furling boom from the yacht without having to cut the endless furling line. This was achieved, among other ways, by taking the furling line in and out of the same hole in the furling boom and by adding a line stripper to the drive, preventing the furling line from running around and getting stuck when the mainsail is hoisted. However, this solution requires that the endless furling line is kept firm when hoisting the mainsail.

Thus, the solution provided by the inventors in 2020 solved one problem, but a new problem was also creased. At the same time, the problem relating to the vulnerable splice of the endless furling line during reefing of the mainsail had still not been resolved.

It may therefore be seen as an object of embodiments of the present invention to provide an in-boom furling system that completely eliminates the vulnerabilities of the fragile splice of the endless furling line.

### BRIEF DESCRIPTION OF THE INVENTION

The above-mentioned object is complied with by providing, in a first aspect, an in-boom furling system for a sailing yacht, the in-boom furling system comprising
a) a static part,
b) a mandrel rotationally attached to the static part and comprising an attachment structure suitable for attachment of a foot of a mainsail to thereby allow furling of the mainsail when rotated in a furling direction and unfurling of the mainsail when rotated in an unfurling direction,
c) a furling structure comprising a rotatably mounted line drive assembly, wherein the rotatably mounted line drive assembly is rotationally attached to the static part and adapted to be rotated relative to the static part by use of a furling line, and
d) a coupling element having a coupling state and a release state, wherein the coupling element:
   a. in the coupling state provides interaction between the line drive assembly and the rotatably mounted mandrel so that the rotatably mounted mandrel is rotatable at least in the furling direction by rotation of the line drive assembly in the furling direction when the mainsail is to be furled around the rotatably mounted mandrel, and
   b. in the release state allows the rotatably mounted mandrel to rotate freely, such as in the unfurling direction, relative to the rotatably mounted line drive assembly.

Thus, the present invention relates to an in-boom furling system for sailing yachts. The in-boom furling system of the present invention is advantageous in that the rotatably mounted mandrel may rotate freely when the coupling element is in its release state. Thus, with the coupling element in its release state (and the rotatably mounted mandrel being free to rotate in both directions) the mainsail may be hoisted without potential complications caused by the furling line. It is moreover advantageous that the in-boom furling system of the present invention provides a braking arrangement when the coupling element is in its coupling state. The braking arrangement prevents the mainsail from unfurling when the coupling element is in its coupling state.

The in-boom furling system of the present invention preferably forms part of furling boom having furling boom body. The body of the furling boom is preferably made of a light-weight material, such as carbon. The overall length of the furling boom may typically be in the range of 5-15 meters.

The in-boom furling system of the present invention may be considered a manual in-boom furling system as the furling of the mainsail is performed by pulling the endless furling line.

The endless furling line may be operated directly by hand or via a winch that may be manual or electrical.

The in-boom furling system may be configured for attachment to a mast of the sailing yacht. More particularly, the static part of the in-boom furling system may be configured for attachment to a mast of the sailing yacht. It should though be noted that the in-boom furling system of the present invention may be attached to other parts of the sailing yacht.

As discussed in further details below the static part of the in-boom furling system may comprise a boom front fitting element comprising a number of brackets configured to be secured to a mast of the sailing yacht.

The coupling element, in the coupling state, may provide interaction between the rotatably mounted mandrel and the static part thereby preventing free rotation of the rotatably mounted mandrel in the unfurling direction. The interaction between the rotatably mounted mandrel and the static part may be via the rotatably mounted line drive assembly. In the present context the term "free rotation" does not exclude that the rotatably mounted mandrel may be allowed to rotate marginally in the unfurling direction when coupling element is in its the coupling state. The marginal rotation allowed in the unfurling direction may correspond to the angular distance between pawl-stops provided in the rotatably mounted line drive assembly as disclosed in further details below.

The rotatably mounted line drive assembly may comprise a first ratchet assembly ensuring that the rotatably mounted line drive assembly is rotatable in essentially only the furling direction. In the present context the term "essentially" relates to the fact that the rotatably mounted line drive assembly may be allowed to rotate marginally in the unfurling direction. The marginal rotation allowed in the unfurling direction may correspond to the angular distance between pawl-stops provided in the rotatably mounted line drive assembly.

The first ratchet assembly may be secured to the static part, and the first ratchet assembly may comprise one or more mechanically biased pawls configured to engage with a first set of pawl-stops provided in the rotatably mounted line drive assembly. With this arrangement the rotatably mounted line drive assembly may, with a marginal exception, be allowed to rotate only in the furling direction. The rotatably mounted line drive assembly may comprise a peripheral track configured to receive the furling line, such as a 10 mm endless furling line.

The coupling element of the in-boom furling system may comprise a second ratchet assembly releasably attached to the rotatably mounted mandrel. The releasably attachment between the second ratchet assembly and the rotatably mounted mandrel is advantageous as it allows that part of the in-boom furling system may be removed for service or repair without being forced to remove the rotatably mounted mandrel (and a mainsail furled around it) as well.

The second ratchet assembly may comprise one or more pivotably mounted pawls which, when in a first state (unfolded state), is/are mechanically biased and configured to engage with a second set of pawl-stops provided in the rotatably mounted line drive assembly so that the rotatably mounted mandrel is rotatable in essentially only the furling direction relative to the line drive assembly. Again, the term "essentially" does not exclude that the rotatably mounted mandrel may rotate marginally in the unfurling direction.

The one or more pivotably mounted pawls of the second ratchet assembly may also be in a second state (folded state). When in the second state, the one or more pivotably mounted pawls is/are prevented from engaging with the second set of pawl-stops provided in the rotatably mounted line drive assembly so that the rotatably mounted mandrel is allowed to rotate freely, such as in the unfurling direction, relative to the rotatably mounted line drive assembly. Thus, with the one or more pivotably mounted pawls in the second state the rotatably mounted mandrel is allowed to rotate freely in both directions.

As already mentioned, the static part may comprise a boom front fitting element comprising a number of brackets configured to be secured to the mast of the sailing yacht. Moreover, a moveable release arm having a coupling position and a release position may be provided. The moveable release arm may be operatively connected to a moveable release bearing having corresponding coupling and release positions. The moveable release bearing is, when the moveable release arm and the moveable release bearing are in release positions, configured to mechanically interact and pivot the one or more pivotably mounted pawls of the second ratchet assembly into the second state (folded state) in order to prevent the one or more pivotably mounted pawls from engaging with the second set of pawl-stops provided in the rotatably mounted line drive assembly, and thereby provide the release state of the coupling element. The release state of the coupling element ensures that the rotatably mounted mandrel may be allowed to rotate freely, such as in the unfurling direction. The rotatably mounted mandrel may also rotate in the furling direction.

When the moveable release arm and the moveable release bearing are in coupling positions, the one or more pivotably mounted pawls of the second ratchet assembly is/are configured to be in the first state (unfolded state) so that the rotatably mounted mandrel is rotatable in essentially only the furling direction relative to line drive assembly to provide the coupling state of the coupling element. Again, the term "essentially" does not exclude that the rotatably mounted mandrel may rotate marginally in the unfurling direction.

The moveable release arm may extend through an opening or slit in the boom front section, such as through an opening or slit in the boom front fitting element. In this implementation the moveable release arm is operated using a release arrangement, such as a release line, attached to the moveable release arm on the outside of the boom front section.

Alternatively, the moveable release arm may, such as in its entirety, be arranged inside the boom front section, and operated using a release arrangement, such as a release line, that extends from the interior/inside of the boom front section to the exterior/outside of the boom front section. Arranging the moveable release arm inside the boom front section may be advantageous in that it may provide a more direct and easy operation of the moveable release arm. Moreover, when arranged inside the boom front section the moveable release arm is protected against the harsh environment on a sailing yacht, such as massive UV exposure, salt water/seawater etc..

The moveable release arm may be mechanically biased, such as spring loaded, towards its coupling position. Similarly, the mechanically biasing of the one or more pawls of the first and second ratchet assemblies may be provided via spring loading.

In a second aspect, the present invention relates to a furling boom comprising an in-boom furling system according to the first aspect.

In a third aspect, the present invention relates to a method for hoisting a mainsail of a sailing yacht comprising an in-boom furling system according to the first aspect, the method comprising the steps of
a) positioning the moveable release arm in its release position so that the rotatably mounted mandrel is allowed to rotate freely,
b) hoisting the mainsail to a desired height using a main halyard, and
c) positioning the moveable release arm in its coupling position so that the rotatably mounted mandrel is rotatable in essentially only the furling direction relative to line drive assembly.

As previously addressed, the term "essentially" does not exclude that the rotatably mounted mandrel may rotate marginally in the unfurling direction.

In a fourth aspect, the present invention relates to a method for furling or reefing a mainsail of a sailing yacht comprising a manual in-boom furling system according to the first aspect, the method comprising the steps of
a) positioning the moveable release arm in its coupling position so that the rotatably mounted mandrel is rotatable in essentially only the furling direction relative to line drive assembly,
b) loosening a main halyard, and
c) furling or reefing the mainsail a desired level by rotating the line drive assembly using the furling line.

As previously addressed, the term "essentially" does not exclude that the rotatably mounted mandrel may rotate marginally in the unfurling direction.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

The present invention will now be described in further details with reference to the accompanying figures where
Fig. 1 shows selected elements of the in-boom furling system,
Fig. 2 shows a detailed view of elements of the in-boom furling system,
Fig. 3 shows a more detailed illustration of the in-boom furling system,
Fig. 4 shows an almost assembled in-boom furling system,
Figs. 5a and 5b show enlarged views of the boom front fitting element,
Figs. 6a and 6b show enlarged views of the rotatably mounted line drive assembly and the first ratchet assembly,
Fig. 7 shows an exploded view of the rotatably mounted line drive assembly and the first ratchet assembly,
Fig. 8 shows a close-up of the second ratchet assembly,
Fig. 9 shows an exploded view of the second ratchet assembly,
Fig. 10 shows the boom front fitting element and the second ratchet assembly with its pawls in the first/unfolded state,
Fig. 11 shows the boom front fitting element and the second ratchet assembly with its pawls in the second/folded state,
Fig. 12 shows an implementation of the moveable release arm when it is arranged inside the boom front section,
Fig. 13 shows an exploded view of the moveable release arm from the inside of the boom front section, and
Fig. 14 shows an assembled view of the moveable release arm from the inside of the boom front section.

### DETAILED DESCRIPTION OF THE INVENTION

As it will be discussed in further details below the present invention relates to an in-boom furling system for a sailing yacht, the in-boom furling system comprising a static part, a mandrel rotationally attached to the static part, a furling structure comprising a rotatably mounted line drive assembly, and a coupling element having a coupling state and a release state.

In the following the in-boom furling system of the present invention is disclosed as being attached to a mast of the sailing yacht. More particularly, the static part of the in-boom furling system is attached to a mast of the sailing yacht. It should though be noted that the in-boom furling system of the present invention may be attached to other parts of the sailing yacht.

As it will be discussed in further details in relation to the following figures the mandrel is rotatably mounted relative to the static part, and it comprises an attachment structure suitable for attachment of a foot of a mainsail. With this arrangement furling of the mainsail when rotated in a furling direction and unfurling of the mainsail when rotated in an unfurling direction is allowed. Furling of the mainsail is facilitated by the line drive assembly of the furling structure in that the rotatably mounted line drive assembly is rotationally attached to the static part and adapted to be rotated relative to the static part by use of a furling line, such as an endless furling line.

As already addressed the coupling element can be in one of two states, i.e. the coupling can be in a coupling state or a release state. In the coupling state the coupling element provides interaction, such as mechanical interaction, between the line drive assembly and the rotatably mounted mandrel so that the rotatably mounted mandrel is rotatable at least in the furling direction by rotation of the line drive assembly in the furling direction. In the release state the coupling element allows the rotatably mounted mandrel to rotate freely, such as in the unfurling direction, relative to the rotatably mounted line drive assembly.

As it will become apparent from the following disclosure the coupling element, when in the coupling state, provides interaction between the rotatably mounted mandrel and the static part thereby preventing rotation of the rotatably mounted mandrel in the unfurling direction. This interaction, between the rotatably mounted mandrel and the static part, is provided via the rotatably mounted line drive assembly.

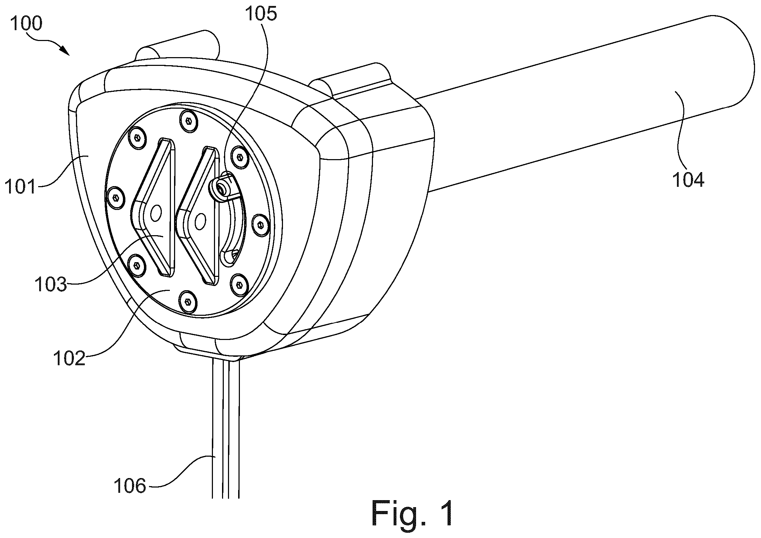

Referring now to Fig. 1, selected elements of the in-boom furling system 100 are depicted. As seen in Fig. 1 the in-boom furling system 100 comprises, among other elements, a boom front section 101, a boom front fitting element 102 comprising a number of brackets 103 configured to be secured to the mast of the sailing yacht. Moreover, a moveable release arm 105 having a coupling position and a release position is depicted. In Fig. 1 the moveable release arm extends through an opening or slit in the boom front section 101, such as through an opening or slit in the boom front fitting element 102. The moveable release arm 105 is adapted to be operated using a release arrangement (not shown), such as a release line, attached to the moveable release arm 105.

In Fig. 1 the moveable release arm 105 is positioned in the coupling position (upper position) where the rotatably mounted mandrel 104 is rotatable in essentially only the furling direction. If the moveable release arm 105 is moved to its release position (lower position) the rotatably mounted mandrel 104 is allowed to rotate freely. The boom front fitting element 102 is attached to the boom front section 101 which is attached to a body of a furling boom (not shown). The body of the furling boom and the boom front section 101 is preferably made of a light-weight material, such as carbon. The overall length of the furling boom may typically be in the range of 5-15 meters. As discussed in further details below the moveable release arm 105 of the boom front fitting element 102 is mechanically biased, such as spring loaded, towards its coupling position, i.e. towards its upper position in Fig. 1. The moveable release arm 105 may be moved to its release position (lower position) from a remote location, such as from the cockpit of the sailing yacht, by securing a release line to the moveable release arm 105. Finally, a furling line 106, typically in the form of an endless furling line, is provided for operating the in-boom furling system 100. The furling line 106 may be operated directly by hand or via a winch that may be manual or electrical.

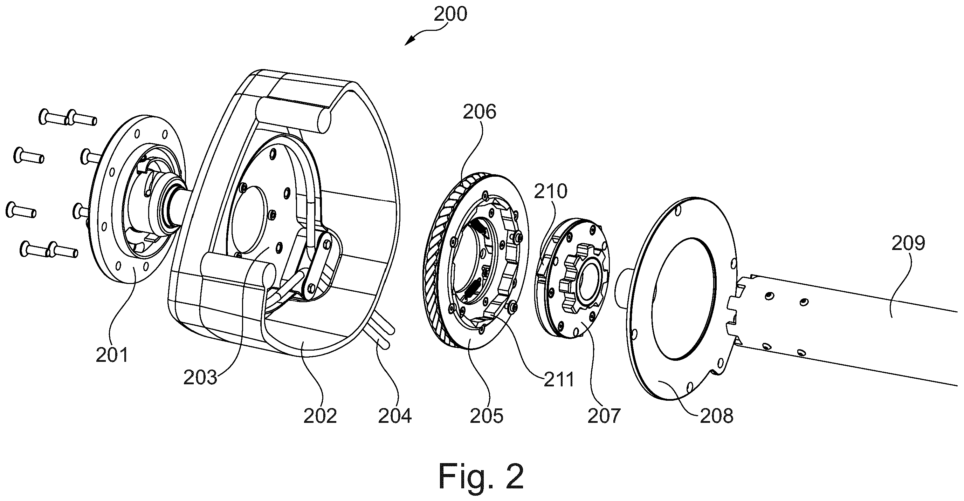

Fig. 2 shows a more detailed view of the elements of the in-boom furling system 200. Similar to Fig. 1, Fig. 2 also depicts the boom front fitting element 201, the boom front section 202 and the rotatably mounted mandrel 209. In addition to this, Fig. 2 also depicts a rotatably mounted line drive assembly 205 comprising a peripheral track 206 configured to receive the furling line 204. The rotatably mounted line drive assembly 205 comprises a first ratchet assembly (only partial visible) ensuring that the rotatably mounted line drive assembly 205 is rotatable in essentially only the furling direction. The first ratchet assembly is secured to a static part in-boom furling system. The static part involves the boom front fitting element 201, the boom front section 202 and/or a housing/cassette 203, 208. As disclosed in further details below the first ratchet assembly comprises one or more mechanically biased pawls (not shown) configured to engage with a first set of pawl-stops (not shown) provided in the rotatably mounted line drive assembly 205.

Moreover, Fig. 2 shows a second ratchet assembly 207 attachable to the rotatably mounted mandrel 209. The second ratchet assembly 207 forms part of the coupling element. The second ratchet assembly 207 comprises one or more pivotably mounted pawls 210 which, when in a first state, is/are mechanically biased and configured to engage with a second set of pawl-stops 211 provided in the rotatably mounted line drive assembly 205 so that the rotatably mounted mandrel 209 is rotatable in essentially only the furling direction relative to the line drive assembly 205. Thus, when the one or more pivotably mounted pawls 210 is/are in the first state the mainsail may be furled/reefed, but not unfurled as the pawls 210, when interacting with the pawl-stops 211, act as a brake. In Fig. 2 the one or more pivotably mounted pawls 210 is/are in the first state which is an unfolded state.

The one or more pivotably mounted pawls 210 may also be in a second state which is a folded state. In the second state, the one or more pivotably mounted pawls 210 is/are prevented from engaging with the second set of pawl-stops 211 provided in the rotatably mounted line drive assembly 205 so that the rotatably mounted mandrel 209 is allowed to rotate freely, such as in the unfurling direction, relative to the rotatably mounted line drive assembly 205. Fig. 2 moreover shows a housing/cassette 203, 208 within which the rotatably mounted line drive assembly 205 and the second ratchet assembly 207 are to be arranged when assembled. The housing/cassette 203, 208 is arranged within the boom front section 202.

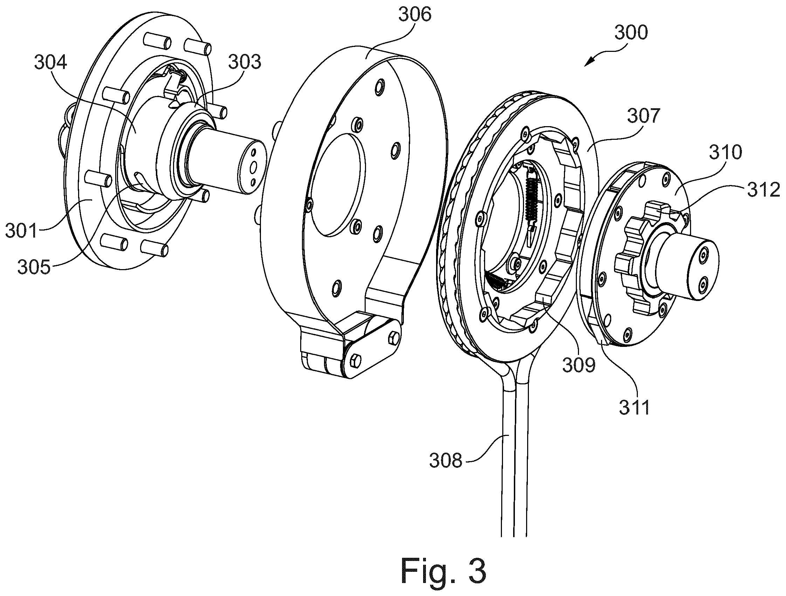

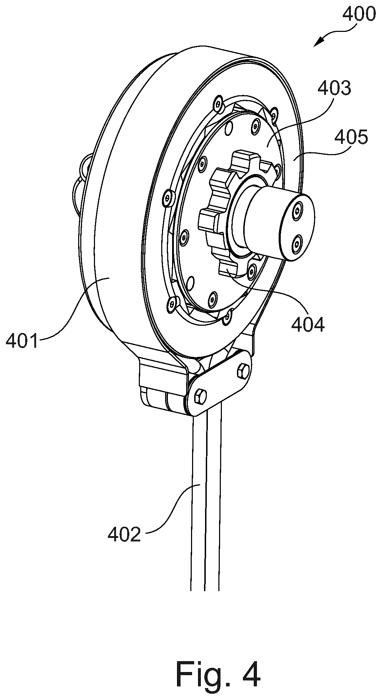

Referring now to Fig. 3, a more detailed illustration of the in-boom furling system 300 is depicted thus showing the boom front fitting element 301 and the housing/cassette 306 within which the rotatably mounted line drive assembly 307 and the second ratchet assembly 310 are to be arranged when assembled, see Fig. 4. The rotatably mounted line drive assembly 307 is adapted to be operated, i.e. rotated, using a furling line 308, such as an endless furling line. As already mentioned, the rotatably mounted line drive assembly 307 comprises first (not visible) and second sets of pawl-stops 309 configured to engage with the first (only partial visible) and second 310 ratchet assemblies, respectively. With respect to the second ratchet assembly 310, the one or more pivotably mounted pawls 311 is/are, in Fig. 3, in the first state (unfolded state) and the mainsail may then be furled or reefed, but not unfurled as the pawls 311, when interacting with the pawl-stops 309, act as a brake.

Although not depicted in Fig. 3 the rotatably mounted mandrel is adapted to engage with the engaging element 312 of the second ratchet assembly 310. With respect to the boom front fitting element 301 the conically shaped release bearing 303 is configured to move in the direction of, and interact with, the second ratchet assembly 310 when moving the release arm (shown in Fig. 1 as 105) of the boom front fitting element 301 from the coupling position (upper position) to the release position (lower position). As discussed in further details below, the movement of the release bearing 303 in the direction of the second ratchet assembly 310 is provided by a rotational movement of the support structure 304 within which a section of a helical track 305 is provided. Moving the release arm (shown in Fig. 1 as 105) from the coupling position (upper position) to the release position (lower position) causes a rotation of the support structure 304 which causes the release bearing 303 to move in the direction of and interact the second ratchet assembly 310 so that the one or more pivotably mounted pawls 311 is/are brought to a folded state.

Fig. 4 shows an almost assembled in-boom furling system 400 without the end cover and the rotatably mounted mandrel. Thus, Fig. 4 depicts the housing/cassette 401, the furling line 402, the rotatably mounted line drive assembly 405 and the second ratchet assembly 403 with the engaging element 404 configured to engage with the rotatably mounted mandrel (not shown).

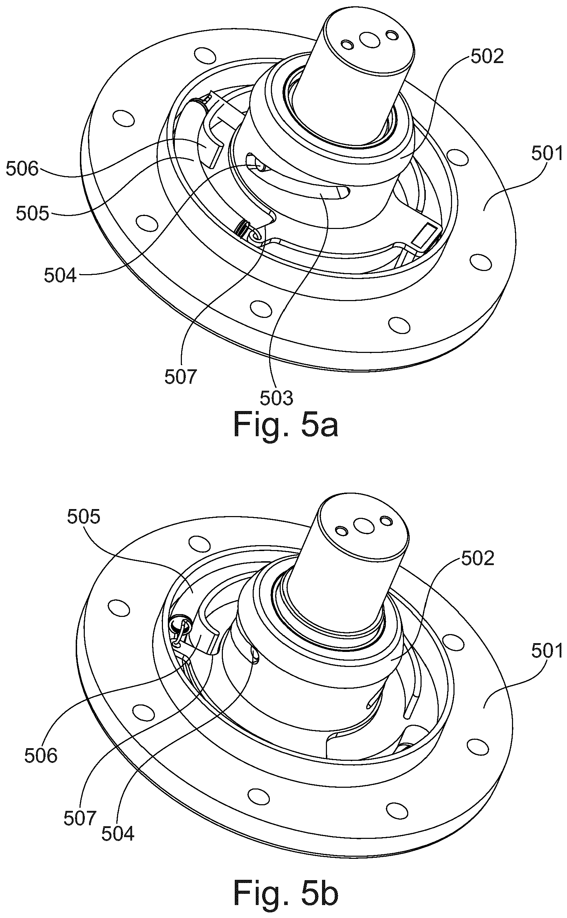

Turning now to Figs. 5a and 5b, enlarged views of the boom front fitting element 501 are depicted where the conically shaped release bearing 502, in Fig. 5a, is in a release position, whereas in Fig. 5b the conically shaped release bearing 502 is in a coupling position. As already mentioned, the moveable release arm (not visible) is operatively connected to the moveable release bearing 502, and that the moveable release arm and the moveable release bearing 502 have associated coupling and release positions, i.e. the moveable release arm and the moveable release bearing 502 may both be in the coupling position, or they may both be in the release position. The moveable release arm and the moveable release bearing 502 are mechanically biased (spring loaded by spring 505) towards the coupling position as depicted in Fig. 5b there a mechanical stop is provided by the arm 506 which abuts the edge 507. In Fig. 5a, the moveable release bearing 502 is moved forward by rotation in that the static pin 504 follows the helical track 503.

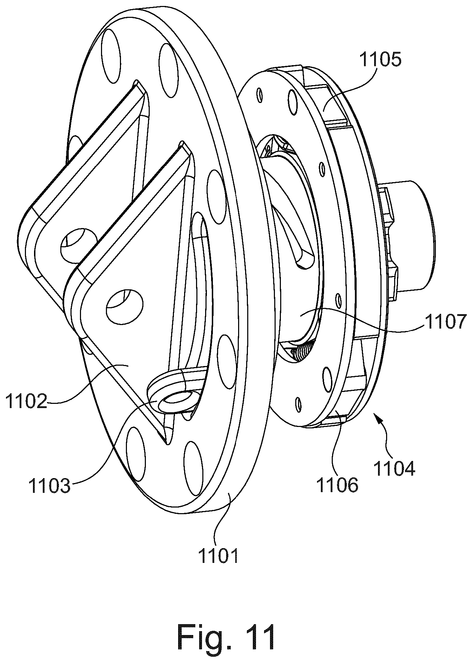

When the moveable release arm and the moveable release bearing 502 are in their respective release positions, as depicted in Fig. 5a, the moveable release bearing 502 is configured to mechanically interact and pivot the one or more pivotably mounted pawls of the second ratchet assembly into the second state (folded state). This prevents the one or more pivotably mounted pawls from engaging with the second set of pawl-stops provided in the rotatably mounted line drive assembly whereby the rotatably mounted mandrel is allowed to rotate freely, see also Fig. 11 and the associated disclosure.

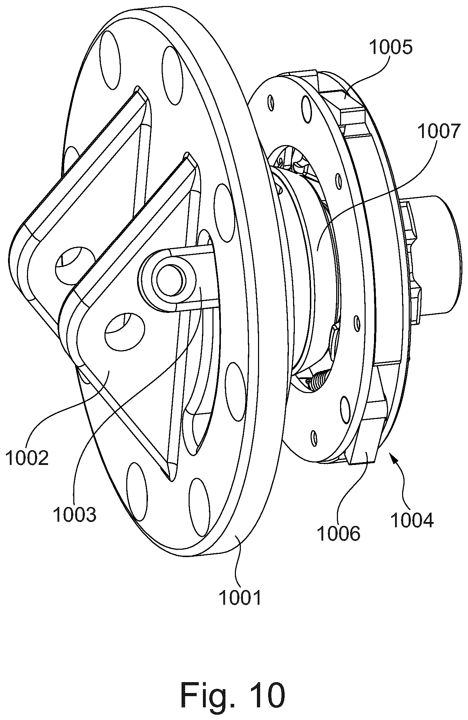

On the other hand, when the moveable release arm and the moveable release bearing 502 are in their respective coupling positions, as depicted in Fig. 5b, the moveable release bearing 502 is configured not to interact with the one or more pivotably mounted pawls of the second ratchet assembly. As a consequence, the one or more pivotably mounted pawls of the second ratchet assembly is/are configured to be in the first state (unfolded state) so that the rotatably mounted mandrel is rotatable in essentially only the furling direction relative to line drive assembly, see also Fig. 10 and the associated disclosure.

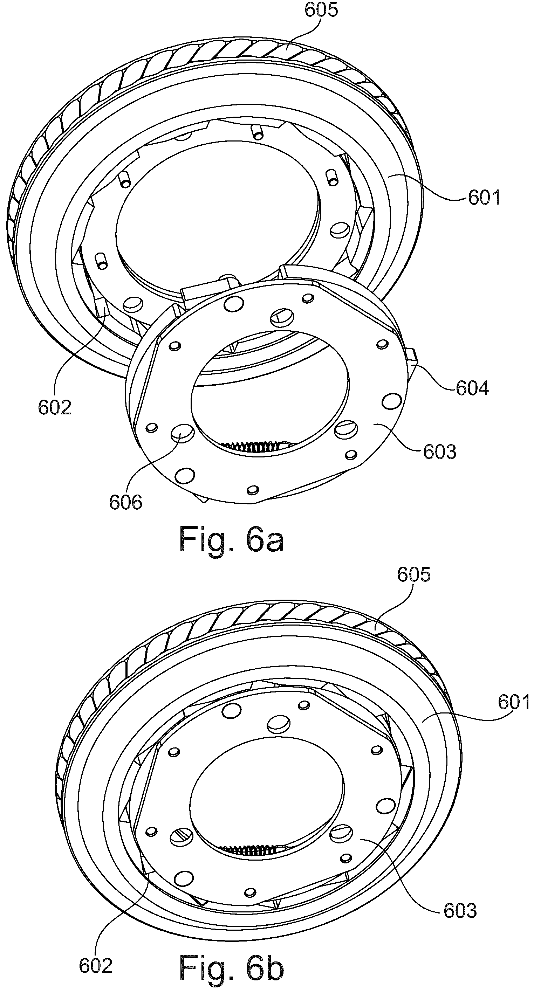

Referring now to Figs. 6a and 6b, enlarged views of the rotatably mounted line drive assembly 601 and the first ratchet assembly 603 are depicted. The first ratchet assembly 603 is attached to the static part of the in-boom furling system via bolt openings 606. The first ratchet assembly 603 is configured to interact with the rotatably mounted line drive assembly 601 via one or more pivotably mounted pawls 604 which is/are mechanically biased and configured to engage with a first set of pawl-stops 602 provided in the rotatably mounted line drive assembly 601 so that rotation of the line drive assembly 601 is essentially only possible in the furling direction. Figs. 6a and 6b also shown a peripheral track 605 provided in the rotatably mounted line drive assembly 601. This peripheral track 605 is configured for receiving the furling line (not shown) which may be a 10 mm endless furling line.

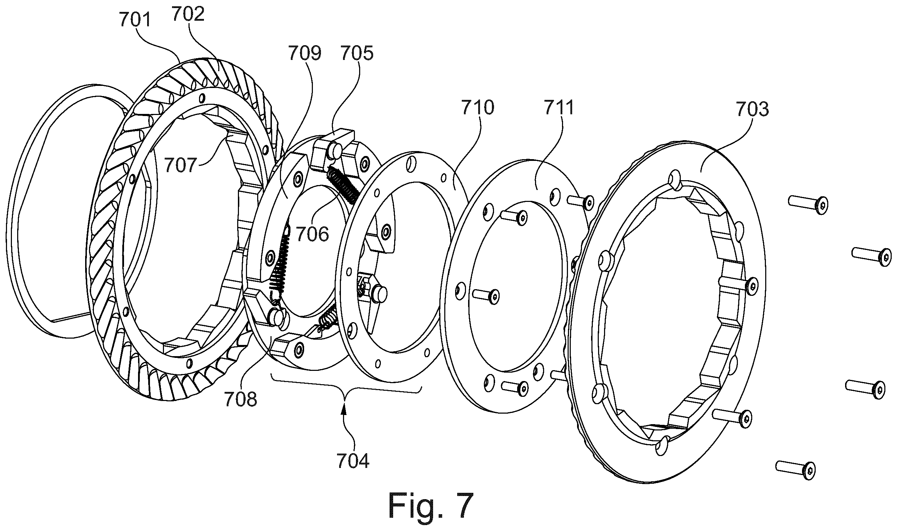

Turning now to Fig. 7, an exploded view of the rotatably mounted line drive assembly 701-703 and the first ratchet assembly 704 are depicted. The first ratchet assembly 704, which is configured to be attached to the static part of the in-boom furling system, comprises a number of spring loaded (via spring 706) and pivotably mounted pawls 705 which are configured to engage with the first set of pawl-stops 707 provided in the rotatably mounted line drive assembly 701-703. With this arrangement rotation of the line drive assembly 701-703 is essentially only possible in the furling direction. Fig. 7 also depicts the peripheral track 702 configured to receive the furling line (not shown). As seen in Fig. 7, the first ratchet assembly 704 is a sandwich construction between two plates 708, 710 which are kept apart by a number of spacers 709. The spring loaded and pivotably mounted pawls 705 are arranged between the spacers 709. The first ratchet assembly 704 is aligned relative to the first set of pawl-stops 707 by a plate 711.

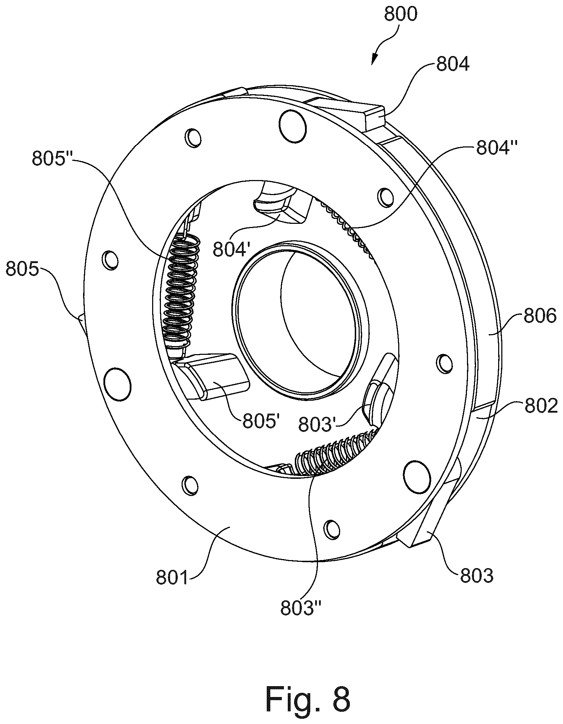

Fig. 8 shows a close-up of the second ratchet assembly 800. Similar to the first ratchet assembly, the second ratchet assembly 800 is also a sandwich construction between two plates 801, 802 which are kept apart by a number of spacers 806. Between the spacers 806 spring loaded and pivotably mounted pawls 803-805 are provided. A spring 803"-805" is provided for each of the pawls 803-805 in order to mechanically bias each of the pawls 803-805 toward the unfolded state (first state) as depicted in Fig. 8. In this unfolded state, where the moveable release arm (not shown) is positioned in its coupling position, the pawls 803-805 are allowed to engage with the second set of pawl-stops provided in the rotatably mounted line drive assembly (not shown) so that the rotatably mounted mandrel (not shown) is rotatable in essentially only the furling direction relative to line drive assembly. The term "essentially" does however not exclude that the rotatably mounted mandrel may rotate marginally in the unfurling direction as discuss previously. Contrary to this, when the moveable release arm (not shown) is positioned in its release position the moveable release bearing (not shown) interacts with the pawl-sections 803'-805' and the pivotably mounted pawls 803-805 are consequently brought into the folded state whereby the pawls 803-805 are prevented from engaging with the second set of pawl-stops provided in the rotatably mounted line drive assembly. As a consequence, the rotatably mounted mandrel (not shown) is allowed to rotate freely.

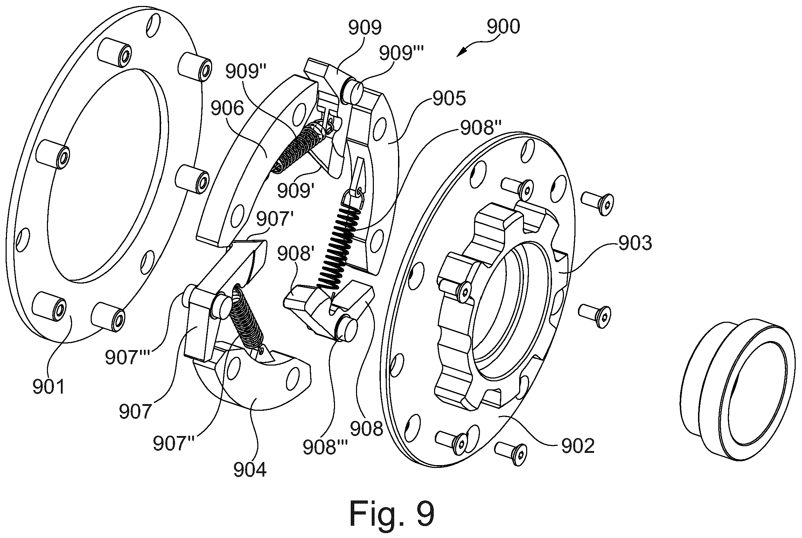

Fig. 9 shows an exploded view of the second ratchet assembly 900. As mentioned above spring loaded and pivotably mounted pawls 907-909 and spacers 904-906 are arranged between the plates 901, 902. Again, a spring 907"-909" is provided for each of the pawls 907-909 in order to mechanically bias each of the pawls 907-909 to the unfolded state (first state). The respective pivoting pins 907‴-909‴ are also depicted in Fig. 9. Similar to Fig. 8, when the moveable release arm (not shown) is positioned in the release position then the moveable release bearing (not shown) interacts with the pawl-sections 907'-909' and the pivotably mounted pawls 907-909 are consequently brought into the folded state whereby the pawls 907-909 are prevented from engaging with the second set of pawl-stops provided in the rotatably mounted line drive assembly. The rotatably mounted mandrel (not shown) is then allowed to rotate freely. Although not depicted in Fig. 9, the rotatably mounted mandrel is configured to engage with the engaging element 903.

Figs. 10 and 11 show the boom front fitting element 1001, 1101 and the second ratchet assembly 1004, 1104 with its pawls in the first/unfolded state and the second/folded state, respectively. The respective brackets 1002, 1102 for attaching the boom front fitting elements 1001, 1101 to the mast of the sailing yacht are also depicted. The rotatably mounted line drive assemblies have though been omitted.

In Fig. 10 the moveable release arm 1003 intending through the opening in the boom front fitting element 1001 and the moveable release bearing 1007 are both in their respective coupling positions. As a result, the one or more pivotably mounted pawls 1005, 1006 of the second ratchet assembly 1004 are in their first state (unfolded state) meaning that the rotatably mounted mandrel (not shown) is rotatable in essentially only the furling direction.

In Fig. 11 the moveable release arm 1103 intending through the opening in the boom front fitting element 1101 and the moveable release bearing 1107 are both in their respective release positions. As a result, the one or more pivotably mounted pawls 1105, 1106 of the second ratchet assembly 1104 are in their second state (folded state) so that the rotatably mounted mandrel (not shown) is allowed to rotate freely, such as in the unfurling direction.

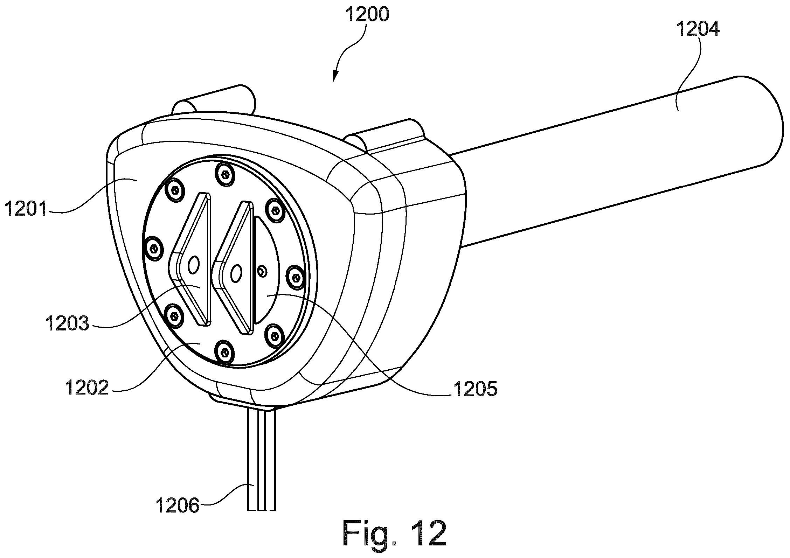

Fig. 12 shows an in-boom furling system 1200 where the moveable release arm (not shown) is incapsulated or hidden inside a boom front section 1201, i.e. where the moveable release arm is arranged inside the boom front section 1201. This implementation is advantageous in that it provides a direct and easy operation of the moveable release arm. Moreover, when arranged inside the boom front section 1201 the moveable release arm is protected against the harsh environment on a sailing yacht, such as massive exposure to UV light, salt water/seawater etc..

As seen in Fig. 12 the in-boom furling system 1200 comprises, among other elements, the boom front section 1201 (incapsulating the moveable release arm), a boom front fitting element 1202 comprising a number of brackets 1203 configured to be secured to the mast of the sailing yacht. The boom front fitting element 1202 is attached to the boom front section 1201 which is attached to a body of a furling boom (not shown). At least one inspection opening each being covered by an inspection hatch 1205 is provided in the boom front fitting element 1202. The inspection opening provides access to the interior of the boom front section 1201 which is advantageous in case of malfunctions in relation to for example the furling line 1206 and the associated line drive assembly, the moveable release bearing etc.. Moreover, a rotatably mounted mandrel 1204 is depicted in Fig. 12. The body of the furling boom and the boom front section 1201 are preferably made of a light-weight material, such as carbon. The overall length of the furling boom may typically be in the range of 5-15 meters.

Although not visible in Fig. 12 the moveable release arm has a coupling position and a release position. In the coupling position the rotatably mounted mandrel 1204 is rotatable in essentially only the furling direction, whereas in the release position of the moveable release arm the rotatably mounted mandrel 1204 is allowed to rotate freely which is appreciated when hoisting the main sail of the sailing yacht.

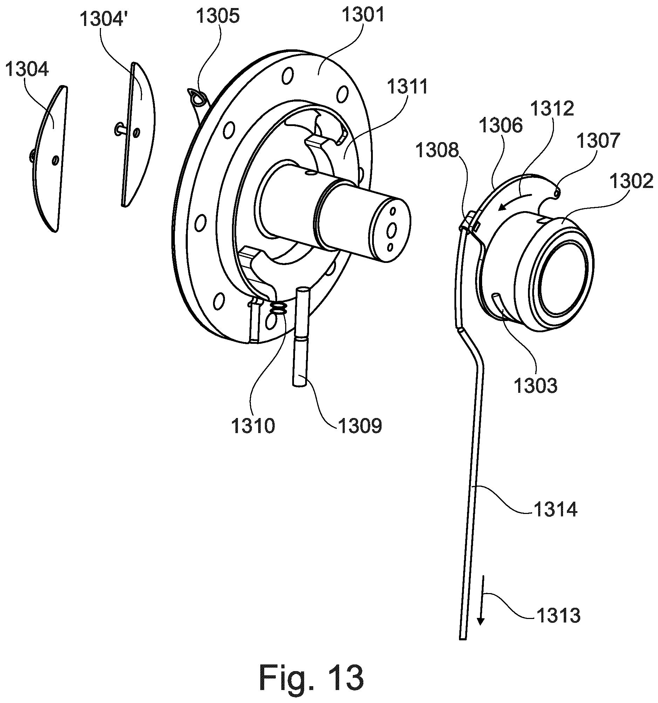

Turning now to Fig. 13 the moveable release arm 1306 is depicted, in an exploded view, from the inside of the boom front section. As depicted in Fig. 13 the moveable release arm 1306 is operatively connected to the moveable release bearing 1302 comprising a helical track 1303 as previously disclosed. In the present context the term "operatively connected" may involve that the moveable release arm 1306 forms an integral part of the moveable release bearing 1302 and thus forms a one-piece structure or element therewith. Alternatively, the moveable release arm 1306 may be a discrete and separate structure or element which is adapted to be secured to the moveable release bearing 1302 by appropriate means. The biasing spring 1305, that biases the moveable release bearing 1302 towards its coupling position, is attached to the moveable release arm 1306 via the opening 1307. A mechanical stop 1311 abuts the edge of the moveable release arm 1306 when it is in the coupling position.

In order to move the moveable release arm 1306 to its release position, where the rotatably mounted mandrel (not shown) is allowed to rotate freely, the moveable release arm 1306 is to be rotated, here in the counterclockwise direction, as indicated by the arrow 1312. This shift from the coupling position to the release position is provided by attaching a release line 1314 to the opening 1308 of the moveable release arm 1306 and pulling, such as applying a force to, this release line 1314 as indicated by the arrow 1313. The release line 1314 extends to the exterior/outside of the boom front section for easy and convenient operation of the moveable release arm 1306 arranged inside the boom front section. In order to ensure smooth handling and operation of the release line 1314 from the interior of the boom front section a guiding shaft 1309 and a low friction ring 1310 is provided. As seen in Fig. 13 inspection hatches 1304,1304' are adapted to be secured to the boom fitting element 1301.

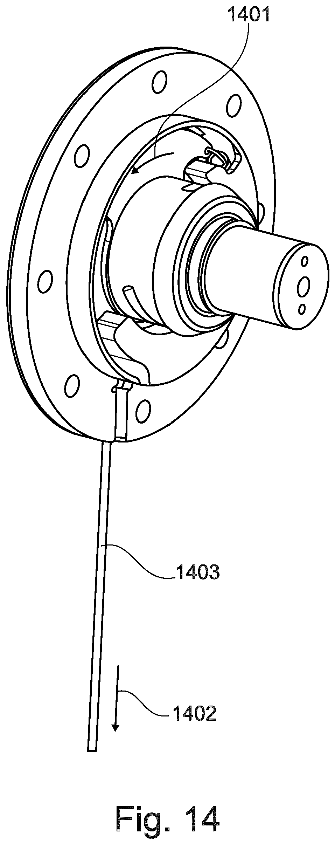

Fig. 14 shows an assembled view of the exploded view of Fig. 13 where the moveable release arm is arranged inside the boom front section. Again, in order to move the moveable release arm from its coupling position to its release position the moveable release arm is to be rotated, here in the counterclockwise direction, as indicated by the arrow 1401. Moving the moveable release arm from the coupling position to the release position is provided by using a release line 1403 and pulling this release line 1403 as indicated by the arrow 1402. As seen in Fig. 14 the release line 1403 extends from the interior/inside of the boom front section to the exterior/outside of the boom front section.

Although not depicted in Figs. 1-14, the present invention also relates to a furling boom for sailing yachts comprising an in-boom furling system as depicted in Figs. 1-14. The boom front section of the furling boom is attached to a body of a furling boom. The body of the furling boom and the boom front section is preferably made of a light-weight material, such as carbon. The overall length of the furling boom may typically be in the range of 5-15 meters. Moreover, a releasable cover may be provided on the furling boom to protect the furled mainsail against UV exposure.

Moreover, the present invention relates to a method for hoisting a mainsail of a sailing yacht having an in-boom furling system according to the present invention. This method comprises the steps of positioning the moveable release arm in its release position so that the rotatably mounted mandrel is allowed to rotate freely; hoisting the mainsail to a desired height using a main halyard, and positioning the moveable release arm in its coupling position so that the rotatably mounted mandrel is rotatable in essentially only the furling direction.

The present invention also relates to a method for furling or reefing a mainsail of a sailing yacht having the in-boom furling, the method comprising the steps of positioning the moveable release arm in its coupling position so that the rotatably mounted mandrel is rotatable in essentially only the furling direction, and loosening a main halyard and furling or reefing the mainsail a desired level by rotating the line drive assembly using the furling line.

In relation to the third and fourth aspects the term "essentially" does not exclude that the rotatably mounted mandrel may, as already disclosed, rotate marginally in the unfurling direction.

Although the invention has been discussed in the foregoing with reference to exemplary embodiments of the invention, the invention is not restricted to these particular embodiments which can be varied in many ways without departing from the invention. The discussed exemplary embodiments shall therefore not be used to construe the appended claims strictly in accordance therewith. On the contrary, the embodiments are merely intended to explain the wording of the appended claims, without intent to limit the claims to these exemplary embodiments. The scope of protection of the invention shall therefore be construed in accordance with the appended claims only, wherein a possible ambiguity in the wording of the claims shall be resolved using these exemplary embodiments.

## Claims

1. An in-boom furling system for a sailing yacht, the in-boom furling system comprising
a) a static part,
b) a mandrel rotationally attached to the static part and comprising an attachment structure suitable for attachment of a foot of a mainsail to thereby allow furling of the mainsail when rotated in a furling direction and unfurling of the mainsail when rotated in an unfurling direction,
c) a furling structure comprising a rotatably mounted line drive assembly, wherein the rotatably mounted line drive assembly is rotationally attached to the static part and adapted to be rotated relative to the static part by use of a furling line, and
d) a coupling element having a coupling state and a release state, wherein the coupling element:
a. in the coupling state provides interaction between the line drive assembly and the rotatably mounted mandrel so that the rotatably mounted mandrel is rotatable at least in the furling direction by rotation of the line drive assembly in the furling direction when the mainsail is to be furled around the rotatably mounted mandrel, and
b. in the release state allows the rotatably mounted mandrel to rotate freely, such as in the unfurling direction, relative to the rotatably mounted line drive assembly.

2. The in-boom furling system according to claim 1, wherein the static part of the in-boom furling system is configured for attachment to a mast of the sailing yacht.

3. The in-boom furling system according to claim 1 or 2, wherein the coupling element, in the coupling state, provides interaction between the rotatably mounted mandrel and the static part thereby preventing free rotation of the rotatably mounted mandrel in the unfurling direction.

4. The in-boom furling system according to claim 3, wherein the interaction between the rotatably mounted mandrel and the static part is via the rotatably mounted line drive assembly.

5. The in-boom furling system according to claim 3 or 4, wherein the rotatably mounted line drive assembly comprises a first ratchet assembly ensuring that the rotatably mounted line drive assembly is rotatable in essentially only the furling direction.

6. The in-boom furling system according to claim 5, wherein the first ratchet assembly is secured to the static part, and wherein the first ratchet assembly comprises one or more mechanically biased pawls configured to engage with a first set of pawl-stops provided in the rotatably mounted line drive assembly.

7. The in-boom furling system according to claim 5 or 6, wherein the coupling element comprises a second ratchet assembly releasably attached to the rotatably mounted mandrel.

8. The in-boom furling system according to claim 7, wherein the second ratchet assembly comprises one or more pivotably mounted pawls which, when in a first state, is/are mechanically biased and configured to engage with a second set of pawl-stops provided in the rotatably mounted line drive assembly so that the rotatably mounted mandrel is rotatable in essentially only the furling direction relative to the line drive assembly.

9. The in-boom furling system according to claim 8, wherein the one or more pivotably mounted pawls, when in a second state, is/are prevented from engaging with the second set of pawl-stops provided in the rotatably mounted line drive assembly so that the rotatably mounted mandrel is allowed to rotate freely, such as in the unfurling direction, relative to the rotatably mounted line drive assembly.

10. The in-boom furling system according to claim 9, wherein the static part comprises a boom front fitting element comprising a number of brackets configured to be secured to a mast of the sailing yacht.

11. The in-boom furling system according to claim 9 or 10, further comprising a moveable release arm having a coupling position and a release position, and wherein the moveable release arm is operatively connected to a moveable release bearing having corresponding coupling and release positions, and wherein the moveable release bearing, when the moveable release arm and the moveable release bearing are in release positions, is configured to mechanically interact and pivot the one or more pivotably mounted pawls of the second ratchet assembly into the second state in order to prevent the one or more pivotably mounted pawls from engaging with the second set of pawl-stops provided in the rotatably mounted line drive assembly, and thereby provide the release state of the coupling element ensuring that the rotatably mounted mandrel is allowed to rotate freely, such as in the unfurling direction.

12. The in-boom furling system according to claim 11, wherein, when the moveable release arm and the moveable release bearing are in coupling positions, the one or more pivotably mounted pawls of the second ratchet assembly is/are configured to be in the first state so that the rotatably mounted mandrel is rotatable in essentially only the furling direction relative to line drive assembly to provide the coupling state of the coupling element.

13. The in-boom furling system according to claim 12, wherein the moveable release arm is mechanically biased, such as spring loaded, towards its coupling position.

14. The in-boom furling system according to any of claims 5-13, wherein the mechanically biasing of the one or more pawls of the first and second ratchet assemblies are provided via spring loading.

15. A furling boom comprising an in-boom furling system according to any of the preceding claims.

16. A method for hoisting a mainsail of a sailing yacht comprising an in-boom furling system according to claim 11, the method comprising the steps of
a) positioning the moveable release arm in its release position so that the rotatably mounted mandrel is allowed to rotate freely,
b) hoisting the mainsail to a desired height using a main halyard, and
c) positioning the moveable release arm in its coupling position so that the rotatably mounted mandrel is rotatable in essentially only the furling direction relative to line drive assembly.

17. A method for furling or reefing a mainsail of a sailing yacht comprising a manual in-boom furling system according to claim 12, the method comprising the steps of
a) positioning the moveable release arm in its coupling position so that the rotatably mounted mandrel is rotatable in essentially only the furling direction relative to line drive assembly,
b) loosening a main halyard, and
c) furling or reefing the mainsail a desired level by rotating the line drive assembly using the furling line.
